# EUROPEAN PATENT APPLICATION

(11) **EP 2 148 271 A1**
(43) Date of publication of application: **27.01.2010**
(21) Application number: 08013281.4
(22) Date of filing: 23.07.2008
(51) Int. Cl.: G06F 3/14

(54) **Portable image sharing system**

(71) Applicant: TOPSEED TECHNOLOGY CORP., Chung Ho City, Taipei Hsien, Taiwan 235 (TW)
(72) Inventor: Chen, Shoei-Lai, Chung Ho City Taipei Hsien Taiwan 235 (TW); Hsu, Che-Hao, Chung Ho City Taipei Hsien Taiwan 235 (TW)
(74) Representative: TER MEER - STEINMEISTER & PARTNER GbR

(57) **Abstract**

A system allowing a portable display apparatus (1) to share an image from a host computer (3) is disclosed. The image sharing system is composed of a portable display apparatus, a transmitter (2) and a computer. An image stored on the computer is acquired by software to send to the transmitter connected to the computer. The transmitter wirelessly sends the image to the portable display apparatus for displaying. A user who holds the portable display apparatus can see the image displayed by the computer without seeing the computer. If combined with a remote control of the computer, this would allow a speaker to make a slide show presentation without having to view directly the image being presented to the audience.

## Description

### FIELD OF THE INVENTION

The present invention relates to a portable display apparatus. More particularly, the invention relates a portable display apparatus for using in an image sharing system.

### BACKGROUND OF THE INVENTION

A computer presentation is performed by projecting slides made by software (such as Microsoft PowerPoint) onto a screen. Such a computer presentation is not only easy to produce but colorful. With using of a remote control for presentation, a speaker does not need an additional assistant to operate the computer executing the presentation any longer. In general, computer presentations are very convenient and effective.

However, there still is a drawback in the computer presentation. If a speaker uses a remote control for presentation, he/she usually does not keep his/her position before the computer. That is to say, the speaker is hard to see a monitor of the computer. Though the speaker can see an image projected on the screen, the speaker's back is usually towards the screen while a presentation is in progress. Therefore, in order to confirm if the slide is skipped correctly or to read the contents of the slide, the speaker must frequently turn around or always keep a specific angle with the audience to see the image on screen. It is very inconvenient. Not only the fluency of presentation is unfavorably affected but it will make speakers feel exacting especially for old people.

### SUMMARY OF THE INVENTION

A primary object of the present invention is to provide a portable image sharing system, which can acquire an image of a computer to send a portable display apparatus held in a user's hand. The portable display apparatus can show an image the same as the computer for allowing users to easily and speedily check the computer images even if they are remote from the computers

To accomplish the object abovementioned, the image sharing system according to the present invention is composed of a portable display apparatus, a transmitter and a computer. An image of the computer is acquired by software to send to the transmitter connected to the computer. The transmitter wirelessly sends the image to the portable display apparatus for displaying. A user who holds the portable display apparatus can see the image of the computer without seeing the computer.

### Brief Description of the Drawings

The invention will now be described in greater detail in connection with the drawings, in which:

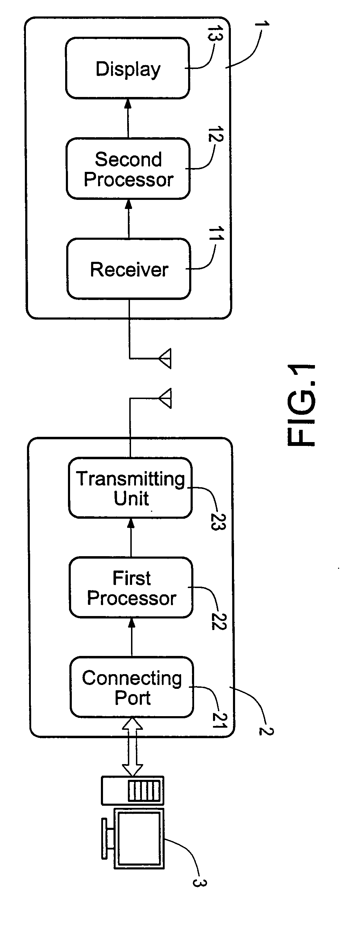

FIG. 1 is a block diagram of a preferred embodiment according to the invention.

### DETAILED DESCRIPTION OF THE INVENTION

Referring to FIG. 1, the present invention is mainly composed of a portable display apparatus 1, a transmitter 2 and a computer 3. There is applied software installed in the computer 3. The software is capable of acquiring an instant image on a monitor of the computer, such as an image of a slide of a presentation file. Hereinafter, the presentation file is adopted as an exemplary description.

The transmitter 2 electrically connects to the computer 3 through a connecting port 21. After an image of the computer 3 is acquired, the acquired image data is sent to a first processor 22 of the transmitter 2 for processing such as data compression. Next, the processed image data is wirelessly transmitted by a transmitting unit 23 of the transmitter 2. The portable display apparatus 1 has a receiver 11 which is corresponding to the transmitting unit 23 for receiving the transmitted image data from the transmitter 2. The image data received by the receiver 11 is sent to a second processor 12 for processing such as data decompression. The second processor 12 then sends the processed image data to a display 13 disposed on the portable display apparatus 1 for displaying. Users holding the portable display apparatus 1 can see an instant image of the computer by the display 13.

The wireless connection between the portable display apparatus 1 and the transmitter 2 is implemented by radio frequency signals. The connecting port 21 can be, but not limited to, a universal serial bus (USB) plug, which can be inserted into a USB socket of the computer 3.

It is worthy of note that because the image sharing system according to the present invention can acquire an instant image to transmit to the portable display apparatus for displaying, it will be much more convenient if the portable display apparatus and a presentation remote control combine together.

When a speaker moves in a seat of presentation because of interaction with the audience or any other reasons, the speaker can use a presentation remote control to operate presentation slides. Further when the remote control and the portable display apparatus of the present invention combine together, the speaker can use the remote control to check an instant image of the slide being projected. The image sharing system can allow the speaker to confirm the instant image immediately after he/she makes an operation on the remote control, so that it is unnecessary to frequently turn around to check the projected image for the speaker. The present invention can make presentations more fluent than ever.

## Claims

1. An image sharing system comprising:
a computer (3) having software capable of acquiring an instant image thereof;
a transmitter (2) comprising a transmitting unit (23), a first processor (22) and a connecting port (21), wherein the connecting port (21) electrically connects to the computer (3), the first processor (22) electrically connects with the transmitting unit (23) and the connecting port (21), an acquired image data is sent to the first processor (22) through the connecting port (21), and the first processor (22) sends the processed image data to the transmitting unit (23) for wireless transmission; and
a portable display apparatus (1) comprising a second processor (12), a display (13) and a receiver (11), wherein the second processor (12) electrically connects with the receiver (11) and the display (13), the receiver (11) is capable of receiving the image data transmitted by the transmitting unit (23), the receiver (11) sends the received image data to the second processor (12), and then the second processor (12) sends the processed image data to the display (13) for displaying.

2. The image sharing system of claim 1, wherein the connecting port (21) is a universal serial bus (USB) plug for inserting into a USB socket of the computer (3).

3. The image sharing system of claim 1, wherein the transmitter (2) transmits radio frequency signals to the portable display apparatus (1).
